# EUROPEAN PATENT APPLICATION

(11) **EP 4 792 931 A1**
(43) Date of publication of application: **19.08.2026**
(21) Application number: 25157911.6
(22) Date of filing: 14.02.2025
(51) Int. Cl.: B01J 21/08, B01J 20/28, B01J 23/75, B01J 35/40, B01J 35/51, B01J 35/63, B01J 35/64, B01J 35/69, B01J 37/00

(54) **PARTICLES WITH ACCESSIBLE PORE NETWORK AND PREPARATION THEREOF**

(71) Applicant: Friedrich-Alexander-Universität Erlangen-Nürnberg, 91054 Erlangen (DE)
(72) Inventor: Vogel, Nicolas, Erlangen (DE); Sultan, Umair, Erlangen (DE); Salcedo Gálvez, Nicolás, Erlangen (DE)
(74) Representative: Aera A/S

(57) **Abstract**

The present invention relates to a particle comprising macropores having an average macropore size within a range of from 100 nm to 10 µm and, optionally, mesopores having a mesopore size within a range of from 2 nm to 50 nm; wherein the macropores form an interconnected pore system which is accessible from the surface, wherein optionally the pore walls of the macropores comprise mesopores, and wherein the particle comprises macropores on the particle surface and wherein the surface macroporosity is at least 20% or more whereby the surface macroporosity is the volume fraction of macropores compared to the total volume in the surface near region of the particle comprising the outer 65 nm layer.

## Description

The present invention relates to particles comprising macropores forming an interconnected pore system, to a powder comprising, or consisting of, the inventive particles and a method for preparing an inventive particle comprising macropores. The present invention also relates to the use of the inventive particles or the powder in catalysis as well as the use of the inventive particles or the powder in media for filtration, separation and/or adsorption processes or as drug carrier.

Porous materials are important across diverse fields, from everyday uses like laundry detergents and pharmaceutical additives to advanced technologies such as chromatography, catalysis, drug delivery, adsorption, and electrode applications. Traditionally, research has focused on micro- and mesoporous materials due to their small pore sizes, which provide large surface areas for adsorption, conversion, or storage of molecular compounds. However, emerging applications demand hierarchical materials incorporating larger macropores for enhanced performance in mass transport and compatibility with larger particle systems such as liquid metal catalysts, nanoparticle chromatography, and biosensors.

A promising method for producing macroporous materials is polymerization-induced spinodal decomposition combined with sol-gel chemistry. This approach, while successful for forming silica monoliths with tunable macropores, faces significant challenges in applications requiring precise packing due to the inherent brittleness and handling difficulties of monolithic structures. Attempts to create macroporous powder particles using water-in-oil emulsions have been hindered by the formation of dense silica shells on the particle surfaces, which restricts pore accessibility and limits their application.

Monoliths and in particular silica monoliths present significant challenges due to their fragility and difficulty in being integrated into geometries required for high-pressure applications. These limitations result in lateral inhomogeneities, which adversely affect their performance, particularly in processes like chromatography. Furthermore, techniques developed to create macroporous powder particles often lead to the formation of dense silica shells on the particle surfaces. These shells block internal pores, thereby limiting the effectiveness and usability of the materials. A further drawback is the insufficient understanding of interfacial properties in water-in-oil emulsions. This lack of knowledge prevents precise control over the pore morphology and distribution within particles, further restricting their application potential.

Hence, there is a need for the development of hierarchical porous materials with well-defined macropores, especially those in the range of hundreds of nanometers, to address challenges in handling, integration, and performance in various advanced technological applications. Silica monoliths, though valuable for their tunable macropores, face difficulties in integration due to their fragility and lateral inhomogeneities, which negatively impact processes like chromatography and high-pressure liquid handling. Additionally, the formation of dense silica shells in macroporous powder particles impedes the accessibility of internal pores, reducing their efficiency. The limited understanding of interfacial properties in water-in-oil emulsions further exacerbates these challenges, hindering the ability to create materials with tailored pore systems. Therefore, developing hierarchical materials with precise control over macropore formation and enhanced interfacial properties is essential to advance applications such as nanoparticle chromatography, biosensors, and catalytic processes.

Therefore, the present invention aims to overcome these limitations by presenting porous particles and particle powder as well as a method for preparing porous particles with open, accessible pore systems while preventing dense shell formation. The invention controls interfacial energies within water-in-oil emulsions to direct the process effectively. By employing advanced surfactant systems, the invention achieves hierarchical macroporous structures with tailored pore sizes, providing enhanced versatility and functionality for diverse applications, including chromatography, catalysis, and biosensors.

The object is solved by the particle according to the present invention as well as the powder comprising the particle according to the present invention. The object is further solved by the method for preparing a particle comprising macropores according to the present invention and the particle obtainable by said method. The object is further solved by the use of the particle according to invention or the powder according to the invention in catalysis, preferably in SILP catalysis or SCALMS catalysis, and the use of the particle according to the invention or the powder according to the invention in media for filtration and/or adsorption processes or as drug carrier, preferably in chromatographic separation.

Particles are discrete, individual units, typically in the form of granules, spheres, or powders. They are characterized by their flexibility with respect to the particle size and shape, ease of handling, and the ability to be packed into desired geometries, which can create additional pore spaces to facilitate mass transport through a particle packing, making them ideal for applications like chromatography, catalysis, and filtration. In contrast, monolithic materials are continuous, single solid structures with macroscopic dimensions. They offer high material uniformity but are challenging to shape, handle, and integrate into specific configurations, particularly under high-pressure conditions. The difference between particles and monolithic materials lies in their form whereby particles are discrete and versatile, while monoliths are unified but less adaptable.

Macropores are to be understood according to the invention as pores in a material with diameters larger than 50 nm. They are significantly larger than mesopores that are in the range of from 2 to 50 nm and micropores being smaller than 2 nm, enabling enhanced mass transport.

Mesopores according to the invention is to be understood as pores within a particle and/or material having a diameter ranging from 2 nm to 50 nm.

Pores on the particle surface is to be understood as openings or voids that exist on the outer layer of a particle. Such pores can vary in size, shape, and distribution depending on the particle's material and synthesis method. These pores play a crucial role in processes such as adsorption, catalysis, and filtration by allowing molecules, fluids, or gases to interact with the particle's interior structure. Surface pores enable mass transport, make available the interior surface area of a particle, and/or provide access to active sites, making them essential in applications like drug delivery, separation processes, catalysis, and sensor technologies.

Pores occupying a certain percentage of the total particle surface is to be understood as the fraction of the surface-near volume of a particle that is composed of pores, wherein the total volume is calculated from the volume segment comprising the outermost 65 nm layer of the particle surface. The percentage relates to the volume of pores with respect to the total volume of the surface-near region of the particle.

Spherical or at least approximately spherical shape is to be understood as follows in the sense of the present invention. The sphericity Ψ (Eq. 1) of a particle is given by the ratio of the surface area of a sphere (sₛ) with the same volume as the given particle to the surface area of the particle (sₚ) (Wadell, H. (1935). Volume, shape, and roundness of quartz particles. The Journal of Geology, 10 43(3), 250-280). $ψ = \frac{{s}_{s}}{{s}_{p}} = \frac{4 π ∗ \left({A}_{p}\right)}{{{perimeter}_{p}}^{2}}$

This value can be determined by particle image analysis, therefore the ratio of the particle area Aₚ and the particle perimeter is used. For a sphere the value for sphericity is 1.

A hierarchical pore system according to the invention is to be understood as pore structure and/or network within a material that contains multiple distinct pore sizes, typically spanning at least two pore size ranges, including macropores and mesopores.

The span of the particle size distribution has been calculated according to the following formula: $span = \frac{\left(d90-d10\right)}{d 50}$ where d10, d50 and d90 are 10%, 50% and 90% percentiles obtained from the particle size distribution. For example, the respective values of a particle size distribution of particles can be determined by means of laser diffraction particles sizing, which, for example, can be performed by the method described in 30 ISO 13320:2009 (Particle size analysis - Laser diffraction methods) or by determining the particle size of, preferably at least 300, individual particles in electron microscope images. Suitable means for image analysis of electron microscope images are known to the skilled person and can be performed, for example, by using the free software ImageJ.

A surfactant according to the invention is to be understood as a chemical compound that lowers the surface tension or interfacial tension between two substances, such as between two immiscible liquids. Surfactants typically have an amphiphilic structure consisting of a hydrophilic head and a hydrophobic tail. In the context of porous materials, surfactants are often used to modify the surface properties of the material and control pore formation. Depending on their nature, surfactants can be classified into ionic or non-ionic surfactants. A water-in-oil emulsion is to be understood as an emulsion where water droplets are dispersed in a continuous oil phase. The water can contain water-soluble species. In this system, the water is the dispersed phase, and the oil is the continuous phase. The emulsion is stabilized by the presence of surfactants which reduce the interfacial tension between the water and the oil phases and prevent the droplets from coalescing.

The term minimal solubility according to the invention refers to a condition in which a compound exhibits a solubility in a given solvent that is sufficiently low to ensure that the compound does not substantially dissolve in the solvent under specified conditions (e.g., temperature, pressure, and solvent composition). Specifically, a compound is considered to have minimal solubility if its solubility is less than 0.001 mole fraction in the solvent at 25°C, such that it remains predominantly in its original phase (e.g., aqueous or oil phase).

Perfluorinated groups is to be understood as chemical groups in which all or the majority (more than 50%) of the hydrogen atoms attached to a carbon backbone are replaced by fluorine atoms, resulting in a structure where the majority (more than 50%) of covalent bonds in the group are carbon-fluorine bonds. Common examples of perfluorinated groups include perfluoroalkyl groups and perfluoroether groups.

According to the invention, a substance exhibiting a greater affinity for another substance means that it has a stronger tendency to interact, bond, or associate with that substance compared to others. This can be due to physical forces, such as van der Waals forces or hydrogen bonding, or chemical interactions, like covalent or ionic bonding. Affinity implies preferential attraction or compatibility. An example is that one surfactant (Sa) exhibits a greater affinity for one compound (Ca) and another surfactant (Sb) exhibits a greater affinity for another compound (Cb).

According to the invention, a surfactant comprising functional groups matching at least partially functional groups of a compound is to be understood as a surfactant whose molecular structure includes specific groups such as functional groups that exhibit chemical or physical compatibility with at least some of the groups such as functional groups present in the target compound. This compatibility facilitates interactions such as bonding, adsorption, or stabilization, leading to improved performance in processes like emulsification, or dispersion. The partial or full match ensures selective and effective interaction between the surfactant and the compound. For example, Surfactant (a) comprises functional groups matching at least partially the functional groups present in Compound (a) and Surfactant (b) comprises functional group matching at least partially the functional groups present in Compound (b).

The term plasmonic nanoparticles according to the invention is to be understood as nanoparticles that exhibit localized surface plasmon resonance phenomena, occurring when the free electrons within the nanoparticles resonate with incident electromagnetic radiation, typically in the visible to near infrared range. These nanoparticles are typically composed of noble metals such as gold, silver, or copper, which possess the ability to support surface plasmon resonances due to their unique electronic properties.

Magnetic nanoparticles according to the invention refer to nanoparticles that exhibit magnetic properties due to the presence of magnetic materials, such as the iron oxides maghemite or magnetite, cobalt or nickel. These nanoparticles typically have sizes in the range of 1-100 nm.

Supported Ionic Liquid Phase (SILP) Catalysis refers to a hybrid system where a thin film of ionic liquid containing a dissolved homogeneous catalyst, such as a transition metal complex, is immobilized on and within a porous solid support. This approach combines the benefits of homogeneous catalysis, being high activity and selectivity, with the easy handling and recyclability of heterogeneous catalysts. SILP catalysts are particularly advantageous for fixed-bed reactor applications, offering tailored reactivity while allowing for scalability in technical processes. The support structure and surface chemistry play a critical role in optimizing performance.

Supported Catalytically Active Liquid Metal Solutions (SCALMS) Catalysis refers to a catalytic system where a metal alloy that is liquid at reaction conditions, containing catalytically active metals, is dispersed on a solid support. The liquid nature of the alloy enables dynamic surface restructuring and allows single-atom catalysis, ensuring efficient catalytic activity while preventing catalyst deactivation, such as sintering. Such a system is particularly beneficial for high-temperature applications, as the liquid metal allows continuous exposure of active sites, resulting in improved stability, selectivity, and reusability of the catalyst.

In a first aspect the present invention relates to a particle comprising, or consisting of,
macropores having an average macropore size within a range of from 100 nm to 10 µm and, optionally, mesopores having a mesopore size within a range of from 2 nm to 50 nm;
wherein the macropores form an interconnected pore system which is accessible from the surface, wherein optionally the pore walls of the macropores comprise mesopores; and
wherein the particle comprises macropores on the particle surface and wherein the surface macroporosity is at least 20% or more, preferably at least 30% or more, and more preferably at least 40% or more, whereby the surface macroporosity is the volume fraction of macropores compared to the total volume in the surface near region of the particle comprising the outer 65 nm layer.

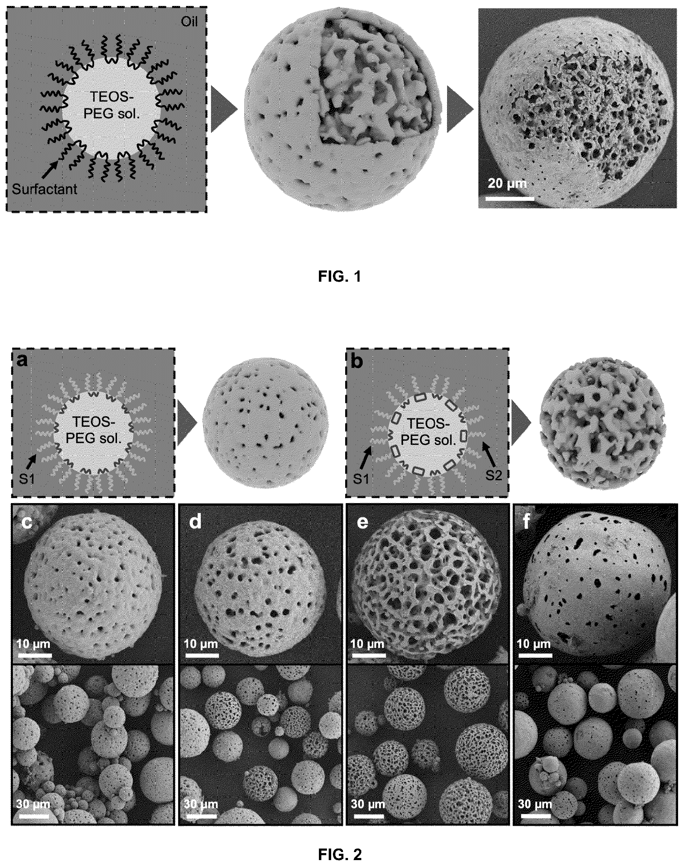

The present invention provides a particle with controlled surface properties. This is particularly surprising as the formation of porous particles by polymerization-induced spinodal decomposition, being different from monolithic materials, regularly includes the formation of a dense shell on the surface which limits pore accessibility in such particles. This shell formation is caused by a preferred wetting of one of the phases when preparing respective porous particles (see Fig. 1). Hence, the present porous particles have fully open and accessible surface pores. Besides, the inventive porous particles can also have both mesopores and macropores.

The surface macroporosity is the volume fraction of macropores compared to the total volume in the surface near region of the particle comprising the outer 65 nm layer. It is preferred that the surface macroporosity is below 70 %, and preferably below 60%. It is also preferred that surface macroporosity is at least 30% or more, and preferably at least 40% or more.

Preparing particles with a respective pore system has not been performed successfully yet. In particular it has not been possible to prepare spherical or at least approximately spherical particles with a satisfying percentage of macropores on the particle surface. Hence, in a preferred embodiment the particle is spherical or least approximately spherical.

It is a preferred embodiment that the average macropore diameter is in the range of from 100 to 8000 nm, preferably in the range of from 150 to 6000 nm, and more preferably in the range of from 200 to 5000 nm.

In another preferred embodiment the particle has a macropore size distribution. It is preferred that the width of the macropore size distribution (FWHM; Full Width at Half Maximum) of the particle is in the range of from 50 to 3500 nm, and preferably in the range of from 100 to 3000 nm.

In another preferred embodiment the particle has a macropore volume in the range of from 0.2 to 1.5 cm³/g, preferably in the range of from 0.4 to 1.3 cm³/g, and more preferably in the range of from 0.6 to 1.3 cm³/g.

It is a preferred embodiment that average mesopore diameter is in the range of from 5 to 45 nm, and preferably in the range of from 10 to 40 nm.

In another preferred embodiment particle has a mesopore size distribution. It is preferred that the width of the mesopore size distribution (FWHM) of the particle is in the range of from 5 to 50 nm, and preferably in the range of from 10 to 40 nm.

In another preferred embodiment the particle has a mesopore volume in the range of from 0.05 to 0.9 cm³/g, and preferably in the range of from 0.1 to 0.7 cm³/g.

In another preferred embodiment the particle has a specific surface area in the range of from 50 to 200 m²/g, and preferably in the range of from 75 to 160 m²/g.

Hierarchical pore systems increase the surface area of the pore system and allow additional applications for the inventive particles. Therefore, it is further preferred that the pore system is hierarchical. The mesopore and macropore formation can be controlled independently so that specific hierarchical pore systems can be formed in the porous particles.

In another preferred embodiment the particle has an average particle size in the range of from 1 to 100 µm, preferably in the range of from 1 to 75 µm, and more preferably in the range of from 5 to 50 µm.

According to another preferred embodiment the particle comprises, or consists of, at least one organic or inorganic material, preferably an inorganic material.

Particles with a filling that can be released in a controlled manner are also advantageous. Thus, in another preferred embodiments, the particle comprises an organic material filling the pores, preferably the material is an organic polymer or a polar organic solvent, such as formamide or n-methylformamide, more preferably the material is an organic polymer selected from the group consisting of polyethylene glycol (PEG), polyacrylic acid (PAA), poly(sodium styrenesulfonate), polypropylene glycol, poloxamers, polyvinyl pyrrolidone, polyacrylamide, poly(furfuryl alcohol), and more preferably the material is polyethylene glycol (PEG).

It is further preferred that the particle comprises, or consists of, at least one compound selected from the group consisting of silica, alumina, aluminosilica, calcium oxide, zirconia, magnesia, iron oxide, chromia, hafnia, tin oxide, lithium oxide, nickel oxide, manganese oxide, copper oxide, cobalt oxide, and titania, and preferably silica.

The chemical formulas of the materials are as follows: SiO₂, Al₂O₃, Al₂O₃·SiO₂, CaO, ZrO₂, MgO, Fe₂O₃, Fe₃O₄, Cr₂O₃, HfO₂, SnO, SnO₂, Li₂O, NiO, MnO, Mn₂O₃, Mn₃O₄, CuO, Cu₂O, CoO, Co₃O₄, and TiO₂.

The particles according to the invention can also comprise further particles, such further particles can be used to add additional properties or tune already existing properties of the particles. Thus, in another preferred embodiment the particle comprises further inorganic particles, preferably inorganic nanoparticles, and more preferably plasmonic, catalytically active and/or magnetic inorganic nanoparticles.

Catalytically active particles are for example gallium oxide, Ga alloys such as Ga-Pt, Ga-Pd, Ga-Ni, Ga-Rh, and Ga-Cu. Other examples of catalytic particles are nanoparticles made from Gold, Silver, Rhodium, Ruthenium, Palladium, Platinum, and alloys thereof. Yet other examples of catalytic particles are transition metal oxides, such as titanium dioxide. Examples for magnetic particles are nanoparticles made of magnetite, maghemite, ferrites, such as CoFe₂O₄, iron, nickel, or iron-platinum alloys. Plasmonic particles are for example gold, silver, and gold-silver alloys.

In another preferred embodiment the walls of the pores comprise a coating with a liquid, preferably an ionic liquid, the coating having a thickness in the range of from 2 nm and 100nm. Such a coating may be a coating used for SILP catalysis.

In a second aspect the present invention relates to a method for preparing a particle comprising macropores, and optionally, mesopores, comprising, or consisting of, the steps of
a) preparing an aqueous solution, wherein the solution comprises a first compound (C1) and a second compound (C2), wherein the first compound and the second compound are dissolved in the aqueous solution, and wherein the molar ratio of the first compound and the second compound (C1/C2) is in the range of from 0.2 to 2.0, preferably in the range of from 0.4 to 0.9;
b) adding a first surfactant (S1) and a second surfactant (S2) to an oil, wherein the molar ratio of the second surfactant and the first surfactant (S2/S1) is in the range of from 0.20 to 2.0, preferably in the range of from 0.50 to 1.50, more preferably in the range of from 0.75 to 1.25 and even more preferably in the range of from 0.90 to 1.10; and
c) combining the aqueous solution prepared in step a) with the oil obtained in step b) and preparing a water-in-oil emulsion, wherein the first compound (C1) and the second compound (C2) dissolved in the aqueous phase exhibit minimal solubility, preferably no solubility, in the oil.

All remarks with respect to the inventive particles as mentioned hereinbefore also apply to the method for preparing particles where applicable.

The present preparation method is an approach to synthesize porous particles with controlled pore systems. It has been surprisingly found that, in particular, the surface properties of the obtained particles can be controlled and e.g., the formation of a dense shell, a common issue that limits pore accessibility in respective particles is avoided. This dense shell is caused by a preferred wetting of one of the phases within the emulsion droplets. By controlling the interfacial wettability by mixtures of surfactants, an equal affinity of both phases to the interface is ensured. As a result, fully open and accessible surface pores are formed. Moreover, the particle size and distribution can be controlled as well. So, it has been surprisingly found that interfacial engineering can be used to create porous particles with complete pore accessibility, opening new pathways for the development and application of advanced porous materials with tailored particle, surface, and pore network properties. Besides, those particles can also have hierarchical pore systems.

In a preferred embodiment the oil is a non-polar organic hydrocarbon oil or a fluorinated oil, and preferably is a perfluorinated oil.

In a further preferred embodiment the first compound (C1) is an organic polymer or a polar organic solvent, such as formamide or n-methylformamide, preferably the first compound is an organic polymer selected from the group consisting of polyethylene glycol (PEG), polyacrylic acid (PAA), poly(sodium styrenesulfonate), polypropylene glycol, poloxamers, polyvinyl pyrrolidone, polyacrylamide, poly(furfuryl alcohol) and more preferably the first compound is polyethylene glycol (PEG).

In another preferred embodiment the second compound (C2) is a Si-, Al-, Ca-, Zr-, Mg-, Fe-, Sn-, Mn-, Cr-, Li-, Ni-, Hf-, Cu-, Co-, and/or Ti-containing compound, preferably is a Si-containing compound, more preferably is tetramethoxysilane or tetraethoxysilane (TEOS), and even more preferably is tetraethoxysilane (TEOS).

The above compounds for the first compound and the second compound can be used in a spinodal decomposition process of inorganic compound - organic compound mixtures in the spherical confinement of emulsion droplets. This can afford the controlled synthesis of macroporous particles, in particular hierarchical macro-mesoporous particles with fully open, accessible and interconnected pore systems.

In a preferred embodiment the first surfactant (S1) comprises fluorinated groups, and preferably perfluorinated groups.

It is preferred that the first surfactant (S1) is of the following structure according to Formula (I):

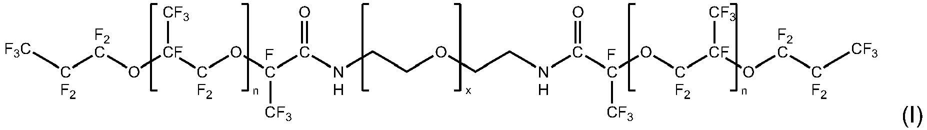

The compound according to Formula (I) is a perfluorpolyether-*block-*polyethyleneglycol-*block-*perfluoropolyether (PFPE-PEG-PFPE) with n being in the range of from 1 - 70, preferably in the range of from 6 to 70, and x being in the range of from 2 to 230.

In another preferred embodiment the second surfactant (S2) comprises fluorinated groups, preferably perfluorinated groups.

It is preferred that the second surfactant (S2) is perfluorooctyl-triethoxysilane according to the following structure according to Formula (II):

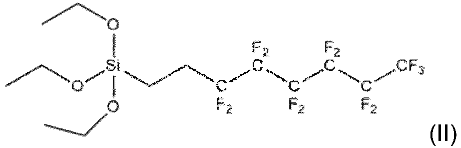

In another preferred embodiment the first surfactant (S1) is free from fluorinated groups; and/or the second surfactant (S2) is free from fluorinated groups.

It is also preferred that the first surfactant (S1) exhibits a greater affinity for the first compound (C1), and the second surfactant (S2) exhibits a greater affinity for the second compound (C2), such that S1 and S2 together stabilize an emulsion comprising C1 and C2 dispersed within a continuous oil phase.

The surfactants stabilize the emulsion droplets. It is important that they have functional groups that match the chemistry of the two phases in the droplet. Hence, in another preferred embodiment the first surfactant comprises functional groups matching at least partially functional groups of the first compound. In a further preferred embodiment the second surfactant comprises functional groups matching at least partially functional groups of the second compound.

It is preferred that in step a) an acid is added to the aqueous solution before the first compound and the second compound are added.

It is also preferred that the pH of the aqueous solution in step a) is in the range of from 0 to 14, preferably in the range of from 0 - 6 or in the range of from 9-14, more preferably is in the range of from 0 to 5, and even more preferably is in the range of from 0 to 2.

In another preferred embodiment in step c) the aqueous solution obtained in step a) is pumped through a membrane before being added to the oil obtained in step b), preferably the membrane has a pore size in the range of from 1 to 30 µm.

Alternatively in step c) the oil obtained in step b) is pumped through a membrane before being added to the aqueous solution obtained in step a), preferably the membrane has a pore size in the range of from 1 to 30 µm.

In another embodiment preferred the emulsion in step c) is prepared by an emulsification treatment selected from high shear mixing, dripping, high-pressure homogenization, rotor-stator systems, mechanical stirring, microfluidization, ultrasonication or vortex shaking, and preferably the emulsion is obtained via vortex shaking.

It is further preferred that the method comprises further steps, namely,
step d) being aging the emulsion for at least 1h, preferably for 1 to 80h and more preferably for 18 to 48h, wherein the temperature is in the range of from 10 to 80°C, preferably 20 to 60°C, and more preferably 30 to 50°C; and/or
step e) being performing a solvent exchange treatment using a basic solution, preferably applying NH₄OH, wherein the temperature is in the range of from 10 to 99°C and preferably 20 to 95°C; and/or
step f) being calcining the obtained particles at a temperature in the range of from 250 to 900 °C, preferably in the range of from 350 to 800°C, more preferably in the range of from 400 to 700°C and even more preferably in the range of from 500 to 600°C.

In a third aspect the present invention relates to a particle according to the invention obtainable by the method according to the invention.

All remarks with respect to the inventive particles and the inventive method as mentioned hereinbefore also apply to the particles according to the invention obtainable by the method according to the invention where applicable.

In a fourth aspect the present invention relates to a powder comprising, or consisting of, the particles according to the invention.

All remarks with respect to the inventive particles as well as the inventive method as mentioned hereinbefore also apply to the powder comprising the inventive particles where applicable.

It is preferred that the particles have an average particle size in the range of from 1 to 100 µm, preferably in the range of from 1 to 75 µm, and more preferably in the range of from 5 to 50 µm.

It is further preferred that the particles have a span of a particle size distribution in the range of from 0.3 to 1.5, preferably in the range of from 0.4 to 1.3 and more preferably in the range of from 0.4 to 0.9.

In a fifth aspect the present invention relates to a use of the particle according to invention or the powder according to the invention in catalysis, preferably in SILP catalysis or SCALMS catalysis.

All remarks with respect to the inventive particles, the inventive powder as well as the inventive method as mentioned hereinbefore also apply to this aspect where applicable.

In a sixth aspect the present invention relates to the use of the particle according to the invention or the powder according to the invention in media for filtration and/or adsorption processes or as drug carrier, preferably in chromatographic separation.

All remarks with respect to the inventive particles, the inventive powder, the inventive use in catalysis as well as the inventive method as mentioned hereinbefore also apply to this aspect where applicable.

### Figures

- Fig. 1:: Schematic illustration of the spinodal decomposition of acidic TEOS-PEG solutions. Formation of macroporous particles via spinodal decomposition within water-in-oil emulsion droplets. The resulting particles have an interconnected macroporous core but a denser silica shell that limits access to bulk pores.
- Fig. 2:: Interfacial control using surfactant mixtures.
(a) Water-in-oil emulsion droplet stabilized by only S1 results in particles with an accumulated silica layer as shell. The oil is a perfluorinated oil and the compounds in the aqueous solution are TEOS-PEG; the applied surfactant is perfluorpolyether-*block-*polyethyleneglycol-*block*-perfluoropolyether (PFPE-PEG-PFPE) (S1).
(b) Water-in-oil emulsion droplet stabilized by a mixture of S1 and S2 results in particles with open pores at the surface. The oil is a perfluorinated oil and the compounds in the aqueous solution are TEOS-PEG; the applied surfactants are perfluorpolyether-*block-*polyethyleneglycol-*block*-perfluoropolyether (PFPE-PEG-PFPE) (S1) and perfluorooctyl-triethoxysilane (S2).
(c-f) High (upper row) and low (lower row) magnification SEM images of particles synthesized using surfactant ratio S2/S1 of 0 (Fig. 2c), 0.5 (Fig. 2d), 1 (Fig. 2e), and 1.9 (Fig. 2f), respectively. The particles show an increase in surface porosity with the addition and increase in the amount of S2 until the optimum ratio of S2/S1=1 is reached where the surface porosity mimics the bulk. Further increase to S2/S1=1.9 results in reformation of the dense silica shell.

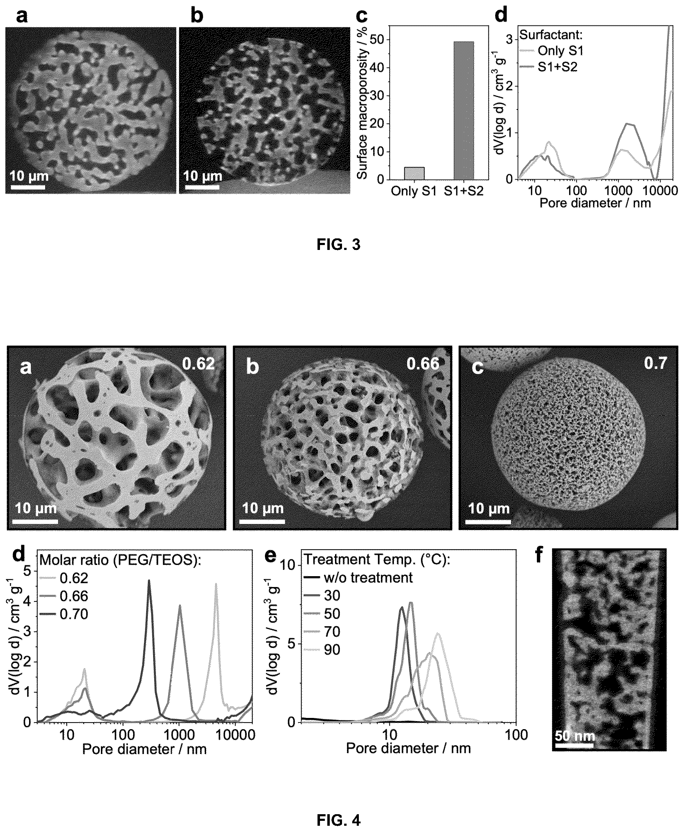

- Fig. 3:: Characterization of particles with silica shell and open surface pores.
(a, b) Virtual cross-section through a 3D X-ray nano-computed tomography reconstruction of a particle synthesized with (a) only surfactant S1 and (b) a mixture of S1 and S2 with molar ratio of 1. The presence of a larger number of pores on the surface can be readily observed when a mixture of S1 and S2 is used.
(c) The surface macroporosity of particles synthesized using only S1 is 4.5% (CE1). However, when a mixture of S1 and S2 (IE5) is used, the surface macroporosity increases nearly tenfold to 49.3%, indicating a completely porous surface.
(d) Pore size distribution determined using Ar 87 K Physisorption and Hg porosimetry shows that particles synthesized using a mixture of S1 and S2 surfactants exhibit an increased macropore volume and size at the expense of mesopore volume due to the absence of excess silica shell. PEG/TEOS molar ratio for both the particle is 0.64.
- Fig. 4:: Control of pore size in hierarchical phase separated particles.
(a-c) SEM images of porous particles produced using PEG/TEOS molar ratios of 0.62 (IE6), 0.66 (IE7), 0.7 (IE8), respectively.
(d) Pore size distribution of the respective particle samples measured using a combination of Ar 87 K physisorption and Hg porosimetry. Increasing the molar ratio results in smaller macropore sizes.
(e) Mesopore size distributions measured using N₂ 77 K physisorption show that the size of the mesopores can be controlled by adjusting the temperature of the solvent exchange treatment.
(f) Virtual cross-section through a 3D electron tomography reconstruction of the macropore wall visualizes the mesopores in the system.

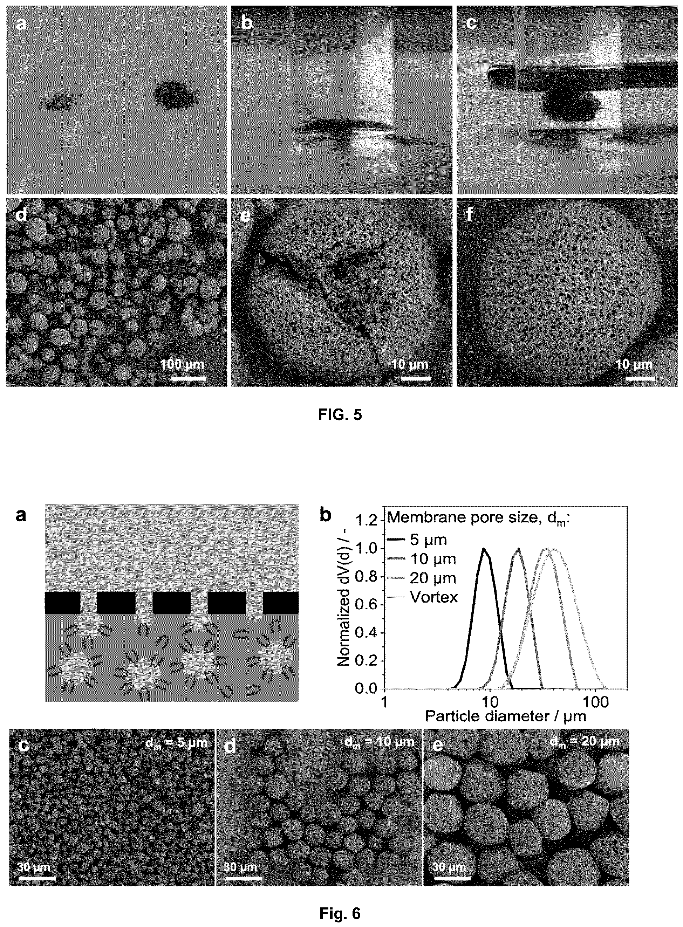

- Fig. 5:: Introduction of magnetic properties via incorporation of CoFe₂O₄ nanoparticles inside the porous particles. (a, b) Optical microscopy images of porous particle powders: (a) regular porous powders having white color (left powder), (a) Porous powder with the inclusion of CoFe₂O₄ nanoparticles exhibiting brown color (right powder). The brown color is indicative of the successful inclusion of CoFe₂O₄ nanoparticles. (b) Image of the CoFe₂O₄ doped porous particle suspension in water without the application of any external stimulus. (c) Image of the CoFe₂O₄ doped porous particle suspension in water under the application of a magnetic field using an external neodymium magnet. The doped porous particles respond to the magnetic field and are lifted off the bottom of the glass vial evidencing the successful incorporation of magnetic properties. (d) Low-magnification SEM image of CoFe₂O₄ doped porous particles. (e) High-magnification SEM image of a single doped porous particle. (f) SEM image of a regular porous particle. The pore structure of the porous particles remains unchanged by the inclusion of CoFe₂O₄ nanoparticles.
- Fig. 6:: Particle size control via membrane emulsification.
(a) Schematic illustration of the membrane emulsification process showing the TEOS-PEG synthesis solution (light gray, upper part) being pushed through a porous membrane (black line with openings in the middle) resulting in droplets in the continuous perfluorinated oil-phase (dark gray, lower part).
(b) Size distributions of particles obtained from membrane emulsification using pores sizes of 5-20 µm (IE2, IE3 and IE4) and vortex-assisted emulsification (IE1). The average size of the particles can be tuned by changing the pore diameter of the membrane, yielding narrower distributions (span ~ 0.6) compared to vortexing.
(c-e) SEM images of porous particles exhibiting controlled sizes, synthesized using membrane emulsification with membrane pore diameter of 5 µm (IE2), 10 µm (IE3), and 20 µm (IE4), respectively.

Figure 1 shows a state-of-the-art porous spherical particle with a dense shell prepared from TEOS and PEG by water-in-oil emulsions. A typical problem observed in such systems is the presence of a dense shell, in Figure 1 a dense silica shell, that forms at the particle surface limiting the accessibility of pores within the particle. This shell formation shows that the interfacial properties in such complex emulsions are difficult to predict and handle.

### Experimental part

The following examples and comparative examples prove the underlying principles and effects of the present invention. The effects of the invention are furthermore illustrated by the Figures.

### 1. Materials

All chemicals were obtained from commercial sources and used as received if not otherwise stated.
Polyethylene glycol (PEG, 35000 g·mol⁻¹, obtained from Sigma-Aldrich);
Tetraethyl orthosilicate (TEOS, ≥ 99%, obtained from VWR);
Nitric acid (HNOs, 65%, obtained from VWR);
Perfluorinated oil (HFE 7500 Novec, obtained from 3M)
Perfluoropolyether-*block*-polyethyleneglycol-*block*-perfluropolyether (PFPE-PEG-PFPE, Surfactant 1, S1, obtained from Creative PEGWorks);
1H,1H,2H,2H-perfluorooctyl-triethoxysilane (Surfactant 2, S2, obtained from Sigma-Aldrich);
1H,1H,2H,2H-perfluorooctyl-trichlorosilane (obtained from Sigma-Aldrich).

The water used in all experiments was purified using Purelab Flex 2 (Elga Veolia, 18.2 MΩ cm) purification unit.

Porous glass membranes of an average pore diameter of 5, 10 and 20 µm (SPG Technology Co. Ltd., Japan).

### 2. Measuring Methods

### Particle size distribution

The particle size distribution was measured by laser diffraction using MasterSizer 3000/Hydro 3000S (Malvern Panalytical) by dispersing them in water (-0.001 wt%) (Rhodes, M.J. and Seville, J., 2024. Introduction to particle technology. John Wiley & Sons).

### Span of the particle size distribution

The span of the particle size distribution has been calculated according to the following formula: $span = \frac{\left(d90-d10\right)}{d 50}$ where d10, d50 and d90 are 10%, 50% and 90% percentiles obtained from the particle size distribution. For example, the respective values of a particle size distribution of particles can be determined by means of laser diffraction particles sizing, which, for example, can be performed by the method described in 30 ISO 13320:2009 (Particle size analysis -- Laser diffraction methods) or by determining the particle size of, preferably at least 300, individual particles in electron microscope images. Suitable means for image analysis of electron microscope images are known to the skilled person and can be performed, for example, by using the free software ImageJ.

### Particle imaging

The particles were imaged in SEM (Gemini 500, Zeiss) using an SE2 detector (Zeiss) with an acceleration voltage of 1 kV, aperture size of 15 µm and a working distance of 6mm.

### Textural characterization

Textural characterization of the powder was performed using a combination of Ar 87 K adsorption (Autosorb IQ, QuantaTec, Anton Paar), N₂ 77 K adsorption (Quadrasorb, Quantachrome Instruments) and mercury intrusion porosimetry (PoreMaster 60, QuantaTec, Anton Paar).

The entire pore size distribution of particles was determined using the Ar 87 K adsorption data for the mesopore range and combined with mercury intrusion data for the macropore range.

Prior to each measurement, the samples were degassed at 150°C under vacuum for 12 hours. Ar 87 K and N₂ 77 K isotherms were measured from relative pressure p/p₀ ≈ 10⁻² up to 1. A dedicated non-local density functional theory kernel was applied to determine pore size distributions from the desorption curve. The specific surface area was determined from the Ar 87 K isotherms in the relative pressure range from 0.05 to 0.30.

Mercury intrusion experiments were carried out over a wide pressure range (vacuum up to 60 000 psi) using triple distilled mercury (purity >99.9995%).

The Washburn equation was used to calculate the pore size distribution from the intrusion data, assuming a surface tension of 480 mN·m⁻¹. The contact angle used in the Washburn equation was adjusted in the range of 140° to 155° to allow for a good fit of the pore size distributions determined by Ar 87 K adsorption and Hg intrusion for pore sizes between 20 and 30 nm.

### Calculations

- Washburn equation (Washburn et. al.; Phys. Rev. 1921, 17 (3), 273-283)

### Characterization of internal structure

X-ray nano-computed tomography (nano-CT) was utilized to characterize the internal 3D structure and surface porosity of the particles. For this, a lab-based Zeiss Xradia 810 Ultra X-ray microscope was used. Additionally, 360° electron tomography (360°-ET) was performed using a Titan Themis³ 300 (FEI) transmission electron microscope to visualize the mesopores (Sultan et. al.; Small 2023, 19 (27), 2300241).

### 3. Preparation of the particles

### Porous particle synthesis

The porous particles were synthesized according to the following customized synthesis route.

0.97 g of HNOs was mixed with 10.26 g of water and 1.16 g of PEG was added. The solution was stirred until the PEG was completely dissolved. 8.32 g of TEOS was then added and the solution was stirred until it turned clear thereby obtaining the PEG-TEOS aqueous synthesis solution with a PEG/TEOS molar ratio of 0.66.

For the water-in-oil emulsion, the surfactants, PFPE-PEG-PFPE (S1) and perfluorooctyl-triethoxysilane (S2), were dissolved in the perfluorinated oil with a total surfactant concentration of 0.2 wt.% and in molar ratios of S2:S1 = 0, 0.5, 1.0 and 1.9 (obtained particles are shown in Fig. 2 with surfactant ratio S2/S1 of 0 (Fig. 2c), 0.5 (Fig. 2d), 1 (Fig. 2e), and 1.9 (Fig. 2f)). The prepared PEG-TEOS synthesis solution was added to the perfluorinated oil solution. The mixture was emulsified using a vortex shaker at 2500 rpm for 40 seconds to generate droplets. The emulsion was then aged at 40°C for 24 hours to allow phase separation and complete condensation to take place. The emulsion was filtered to recover the white powder which was washed with ethanol and water. The powder was then subjected to a solvent exchange treatment to remove excess PEG and to incorporate mesopores using 1 M NH₄OH for 9 hours at temperatures 30, 50, 70 and 90°C. The powder was then filtered and dried overnight at 60°C to remove all solvent, then calcined at 550°C to remove any traces of organic residues.

For introducing magnetic properties into the porous particles the synthesis protocol was modified accordingly, 0.237 g of HNOs was mixed with 2.481 g of a 2 wt. % suspension of CoFe₂O₄ nanoparticles (15 nm in diameter, 3 nm silica shell) that were synthesized using a protocol from literature (Luthardt et. al.; Adv. Funct. Mater. 2025, 35 (2), 2412296). After homogenization, 0.279 g of PEG were added and allowed to dissolve completely. Afterwards, 1.985 g of TEOS was added to the mixture and stirred for 15 minutes. Following this, the mixture was emulsified together with a perfluorinated oil solution containing a mixture of surfactants S1 and S2 and subjected to post-synthesis treatment, as described above. The so-obtained CoFe₂O₄ doped porous particles and how they compare to a regular porous particle are shown in Fig. 5(d) and 5(e). The pore structure of the porous particles remains unchanged by the inclusion of CoFe₂O₄ nanoparticles.

For membrane emulsification, the porous glass membrane was first surface modified using perfluorooctyl-trichlorosilane. The membrane was exposed to oxygen plasma (100 W) for 10 minutes for cleaning and then, together with 50 µL of the silane, placed inside a vacuum desiccator pumped to 190 mbar, after which the pump was stopped and the dessicator was allowed to stand for 24 hours. The membrane was then washed with ethanol to remove any unreacted perfluorooctyl-trichlorosilane molecules and dried, followed by treatment at 100 °C for 1 h to ensure the condensation of all silane molecules to the surfaces. The PEG-TEOS synthesis solution was then pumped through the membrane at a constant flow rate of 1 ml.h⁻¹ using a syringe pump. Different membranes were used as can be derived from Table 1 and as shown in Fig. 6 (b). The resulting emulsion droplets were collected and subjected to aging, solvent exchange and calcination procedures as described above.

### Characterization of particles

The particles were subjected to the measurement of the average particle sizes and the span of the particle size distribution was determined. The results are provided in Table 1. The average particle diameter in Table 1 was obtained from the particle size distribution, measured via laser diffraction as described under measuring methods, by taking the mode of the distribution.

**Table 1: Average particle sizes and span of the particle size distribution**

| ***Sample*** | ***Emulsification technique*** | ***Average particle diameter (µm)*** | ***Span*** |
|---|---|---|---|
| IE1 | Vortex assisted | 39.8 | 1.24 |
| IE2 | Membrane (5 µm) | 9.5 | 0.6 |
| IE3 | Membrane (10 µm) | 19.4 | 0.64 |
| IE4 | Membrane (20 µm) | 35.8 | 0.8 |

The obtained particles can be prepared with an open surface pore structure and in different particle sizes as can be derived from Fig. 6 (b-e).

The macroporosity values in Table 2 are obtained using 3D reconstructed tomography data, measured using X-ray nano-computed tomography (see Fig. 3 (a), (b) and (c)) as described under measuring methods. Total macroporosity is determined by dividing the volume of pores by the whole volume of the particle. Surface macroporosity was determined by considering only a thin layer of volume, 65 nm thick, at the surface of the particle. Here, the volume of pores in this thin layer was divided by the total volume of the layer to obtain surface macroporosity values.

Both CE1 and IE5 are prepared using the synthesis procedure described above but with a PEG/TEOS molar ratio of 0.64 and surfactant ratio of 0 and 1, respectively. The temperature of the solvent exchange treatment was kept at 60 °C.

**Table 2: Surface macroporosity measurements**

| ***Sample*** | ***Surfactant composition*** | ***Surface macroporosity (%)*** | ***Total macroporosity (%)*** |
|---|---|---|---|
| CE1 | Only S1 (S2/S1=0) | 4.5 | 41.3 |
| IE5 | S1 and S2 (S2/S1=1) | 49.3 | 62.4 |

The characterization data presented in Table 3 was measured using Ar 87 K physisorption and mercury intrusion porosimetry (see Fig. 3 (d)), as described above under measuring methods. Mesopore volume was obtained in the range from 2 to 50 nm and the average mesopore diameter was determined by taking the mode of the pore size distribution in the same range. The width of the mesopore size distribution was determined by calculating the full width at half maxima (FWHM) of the peak in the distribution in the range from 2 to 50 nm. Macropore volume was obtained in the range from 50 to -10000 nm and the average macropore diameter was determined by taking the mode of the pore size distribution in the same range. The width of the macropore size distribution was determined by calculating the full width at half maxima (FWHM) of the peak in the distribution in the range from 50 to -10000 nm. The specific surface area was determined from Ar 87 K physisorption measurements, as described above under measuring methods.

IE6, IE7, and IE8 are prepared using the synthesis procedure described above but with a PEG/TEOS molar ratio of 0.62, 0.66, and 0.70, respectively and a surfactant ratio of 1. The temperature of the solvent exchange treatment was kept at 80 °C. The porous particles obtained using a PEG/TEOS molar ratio of 0.62, 0.66, and 0.70 respectively are shown in Figs. 4 (a) - (c).

**Table 3: Characterization of the particles**

| Sample | Aqueous solution composition (PEG/TEOS molar ratio) | Average Mesopore diameter (nm) | Width of mesopore size distribution (FWHM) | Average Macropore diameter (nm) | Width of macropore size distribution (FWHM) | Mesopore Volume (cm³/g) | Macropore Volume (cm³/g) | Specific surface area (m²/g) | Temperature of solvent exchange treatment (°C) |
|---|---|---|---|---|---|---|---|---|---|
| IE6 | 0.62 (S2/S1=1) | 21 | 14 | 4700 | 1700 | 0.59 | 1.00 | 133.6 | 80 |
| IE7 | 0.66 (S2/S1=1) | 21 | 16.8 | 1038 | 555 | 0.46 | 1.10 | 107.1 | 80 |
| IE8 | 0.7 (S2/S1=1) | 10 - 30* | 10 - 30* | 289 | 117 | 0.31 | 1.24 | 102.7 | 80 |
| CE1 | 0.64 (S2/S1=0) | 22 | 25 | 1147 | 2570 | 0.46 | 0.44 | 97.2 | 60 |
| IE5 | 0.64 (S2/S1=1) | 17 | 16.5 | 1536 | 2600 | 0.24 | 0.90 | 94.2 | 60 |

| | | | | | | | | | |
|---|---|---|---|---|---|---|---|---|---|
| *: For this sample no clear peak for the mesopores, therefore a range where most of the mesopores lie. | | | | | | | | | |

From the experiments provided above, it can be concluded that porous, spherical particles can be prepared from an water-in-oil emulsion, where the aqueous phase consists of mixtures of PEG and TEOS. However, when only one surfactant is used to stabilize the aqueous droplets within the oil phase, the internal pore structure does not penetrate to the outside of the particle. Instead, a shell of solid material at least partially blocks access to the pore network. In contrast, spherical particles with completely open surface pores can be produced by using an optimized ratio of surfactants, e.g. S2:S1 = 1, to form the water-in-oil emulsion. The macropore size of the spherical particles can be further controlled by changing the molar ratio of the initial PEG-TEOS synthesis solution as shown in Fig. 4 (d). In all cases, the pores remain accessible from the surface if the ratio of surfactants S2:S1=1 is used. By reducing the PEG:TEOS molar ratio in the PEG-TEOS synthesis solution, the macropore size can be adjusted within a range from about 200 nm to several micrometers, with the upper limit determined by the size of the spherical particle itself.

Mesopores can be further introduced into the macropore walls by subjecting the emulsion droplets to basic solvent exchange treatment with 1 M NH₄OH. A decrease in temperature during the solvent exchange treatment from 90 to 30°C leads to a reduction in average mesopore size from 25 nm to 12 nm as shown in Fig. 4(e). The use of a membrane emulsification process to synthesize the emulsion droplets results in spherical particles with a narrower size distribution when compared to emulsion droplets formed by vortex-assisted emulsification. By changing the size of the membrane pores, the average diameter of the resultant porous particles can be adjusted from 9 to 40 µm.

It has been shown that nanoparticles such as magnetic nanoparticles such as CoFe₂O₄ nanoparticles can be incorporated within the porous particles which reflect the latter's versatility and adaptability of the porous particles for applications such as catalysis.

## Claims

1. A particle comprising
macropores having an average macropore size within a range of from 100 nm to 10 µm and, optionally, mesopores having a mesopore size within a range of from 2 nm to 50 nm;
wherein the macropores form an interconnected pore system which is accessible from the surface, wherein optionally the pore walls of the macropores comprise mesopores, and
wherein the particle comprises macropores on the particle surface and wherein the surface macroporosity is at least 20% or more, preferably at least 30% or more, and more preferably at least 40% or more whereby the surface macroporosity is the volume fraction of macropores compared to the total volume in the surface near region of the particle comprising the outer 65 nm layer.

2. Particle according to claim 1,
wherein the average macropore diameter is in the range of from 100 to 8000 nm, preferably in the range of from 150 to 6000 nm and more preferably in the range of from 200 to 5000 nm; and/or
wherein the particle has a macropore size distribution; and/or
wherein the average mesopore diameter is in the range of from 5 to 45 nm, and preferably in the range of from 10 to 40 nm; and/or
wherein the particle has a mesopore size distribution; and/or
wherein the particle has a macropore volume in the range of from 0.2 to 1.5 cm³/g, preferably in the range of from 0.4 to 1.3 cm³/g, and more preferably in the range of from 0.6 to 1.3 cm³/g; and/or
wherein the particle has a mesopore volume in the range of from 0.05 to 0.9 cm³/g, and preferably in the range of from 0.1 to 0.7 cm³/g; and/or
wherein the pore system is hierarchical; and/or
wherein the particle is spherical or least approximately spherical; and/or
wherein the particle has an average particle size in the range of from 1 to 100 µm, preferably in the range of from 1 to 75 µm, and more preferably in the range of from 5 to 50 µm; and/or
wherein the particle has a specific surface area in the range of from 50 to 200 m²/g, and preferably in the range of from 75 to 160 m²/g.

3. Particle according to claim 1 or 2,
wherein the particle comprises at least one organic or inorganic material, preferably an inorganic material; and/or
wherein the particle comprises an organic material filling the pores, preferably the material is an organic polymer or a polar organic solvent, such as formamide or n-methylformamide, more preferably the material is an organic polymer selected from the group consisting of polyethylene glycol (PEG), polyacrylic acid (PAA), poly(sodium styrenesulfonate), polypropylene glycol, poloxamers, polyvinyl pyrrolidone, polyacrylamide, poly(furfuryl alcohol), and more preferably the material is polyethylene glycol (PEG).

4. Particle according to any of the preceding claims,
wherein the particle comprises at least one compound selected from the group consisting of silica, alumina, aluminosilica, calcium oxide, zirconia, magnesia, iron oxide, chromia, hafnia, tin oxide, lithium oxide, nickel oxide, manganese oxide, copper oxide, cobalt oxide, and titania, and preferably silica; and/or
wherein the particle comprises further inorganic particles, preferably inorganic nanoparticles, and more preferably plasmonic, catalytically active and/or magnetic, such as CoFe₂O₄, inorganic nanoparticles; and/or
wherein the walls of the pores are coated with liquid, preferably an ionic liquid, the coating having a thickness in the range of from 2 nm and 100 nm.

5. A method for preparing a particle comprising macropores, and, optionally, mesopores, comprising the steps of
a) preparing an aqueous solution, wherein the solution comprises a first compound (C1) and a second compound (C2), wherein the first compound and the second compound are dissolved in the aqueous solution, and wherein the molar ratio of the first compound and the second compound (C1/C2) is in the range of from 0.2 to 2.0, preferably in the range of from 0.4 to 0.9;
b) adding a first surfactant (S1) and a second surfactant (S2) to an oil, wherein the molar ratio of the second surfactant and the first surfactant (S2/S1) is in the range of from 0.20 to 2.0, preferably in the range of from 0.50 to 1.50, more preferably in the range of from 0.75 to 1.25 and even more preferably in the range of from 0.90 to 1.10; and
c) combining the aqueous solution prepared in step a) with the oil obtained in step b) and preparing a water-in-oil emulsion, wherein the first compound (C1) and the second compound (C2) dissolved in the aqueous phase exhibit minimal solubility, preferably no solubility, in the oil.

6. Method according to claim 5,
wherein the oil is a non-polar organic hydrocarbon oil or a fluorinated oil, and preferably is a perfluorinated oil; and/or
wherein the second compound (C2) is a Si-, Al-, Ca-, Zr-, Mg-, Fe-, Sn-, Mn-, Cr-, Li-, Ni-, Hf-, Cu-, Co-, and/or Ti-containing compound, preferably is a Si-containing compound, more preferably is tetramethoxysileane or tetraethoxysilane (TEOS), and even more preferably is tetraethoxysilane (TEOS); and/or
wherein the first compound (C1) is an organic polymer or a polar organic solvent, such as formamide or n-methylformamide, preferably the first compound is an organic polymer selected from the group consisting of polyethylene glycol (PEG), polyacrylic acid (PAA), poly(sodium styrenesulfonate), polypropylene glycol, poloxamers, polyvinyl pyrrolidone, polyacrylamide, poly(furfuryl alcohol) and more preferably the first compound is polyethylene glycol (PEG).

7. Method according to claim 5 or 6,
wherein the first surfactant (S1) comprises fluorinated groups, preferably perfluorinated groups; and/or
wherein the second surfactant (S2) comprises fluorinated groups, preferably perfluorinated groups; and/or
wherein the first surfactant (S1) exhibits a greater affinity for the first compound (C1), and the second surfactant (S2) exhibits a greater affinity for the second compound (C2), such that S1 and S2 together stabilize an emulsion comprising C1 and C2 dispersed within a continuous oil phase; and/or
wherein the first surfactant (S1) comprises functional groups matching at least partially functional groups of the first compound (C1); and/or
wherein the second surfactant (S2) comprises functional groups matching at least partially functional groups of the second compound (C2).

8. Method according to claims 5 to 7,
wherein in step a) an acid is added to the aqueous solution before the first compound and the second compound are added; and/or
wherein pH of the aqueous solution in step a) is in the range of from 0 to 14, preferably in the range of from 0 to 6 or in the range of from 9 to 14, more preferably is in the range of from 0 to 5, and even more preferably is in the range of from 0 to 2.

9. Method according to claims 5 to 8,
- wherein in step c) the aqueous solution obtained in step a) is pumped through a membrane before being added to the oil obtained in step b), preferably the membrane has a pore size in the range of from 1 to 30 µm; or
- wherein in step c) the oil obtained in step b) is pumped through a membrane before being added to the aqueous solution obtained in step a), preferably the membrane has a pore size in the range of from 1 to 30 µm; or
- wherein the emulsion in step c) is prepared by an emulsification treatment selected from high shear mixing, dripping, high-pressure homogenization, rotor-stator systems, mechanical stirring, microfluidization, ultrasonication or vortex shaking, and preferably the emulsion is obtained via vortex shaking.

10. Method according to claims 5 to 9, comprising further steps
d) aging the emulsion for at least 1h, preferably for 1 to 80h and more preferably for 18 to 48h, wherein the temperature is in the range of from 10 to 80°C, preferably 20 to 60°C, and more preferably 30 to 50°C; and/or
e) performing a solvent exchange treatment using a basic solution, preferably applying NH₄OH, wherein the temperature is in the range of from 10 to 99°C and preferably 20 to 95°C; and/or
f) calcining the obtained particles at a temperature in the range of from 250 to 900 °C, preferably in the range of from 350 to 800°C, more preferably in the range of from 400 to 700°C and even more preferably in the range of from 500 to 600°C.

11. A particle according to claims 1 to 4 obtainable by the method according to claims 5 to 10.

12. A powder comprising, or consisting of, particles according to claims 1 to 4 and claim 11.

13. Powder according to claim 12,
wherein the particles have an average particle size in the range of from 1 to 100 µm; and/or
wherein the particles have a span of a particle size distribution in the range of from 0.3 to 1.5, preferably in the range of from 0.4 to 1.3 and more preferably in the range of from 0.4 to 0.9.

14. Use of the particles according to claims 1 to 4 and 11 or the powder according to claims 12 and 13 in catalysis, preferably in SILP catalysis or SCALMS catalysis.

15. Use of the particles according to claims 1 to 4 and 11 or the powder according to claims 12 and 13 in media for filtration and/or adsorption processes or as drug carrier, preferably in chromatographic separation.
